Europäisches Patentamt

European Patent Office

Office européen des brevets

(11) Veröffentlichungsnummer: **0 407 761 A2**

# EUROPÄISCHE PATENTANMELDUNG

(21) Anmeldenummer: 90111381.1

(22) Anmeldetag: 16.06.90

(51) Int. Cl.5: **F16H 53/02, F01L 1/04**

(30) Priorität: **14.07.89 DE 3923250**

(43) Veröffentlichungstag der Anmeldung:
**16.01.91 Patentblatt 91/03**

(84) Benannte Vertragsstaaten:
**DE FR GB**

(71) Anmelder: **Krupp MaK Maschinenbau GmbH**
**Falckensteiner Strasse 2-4**
**D-2300 Kiel 17(DE)**

(72) Erfinder: **Häfner, Reinhard**
**Lärchenweg 3**
**D-2307 Dänisch-Nienhof(DE)**

(74) Vertreter: **Hansmann, Dierk, Dipl.-Ing.**
**Jessenstrasse 4**
**D-2000 Hamburg 50(DE)**

(54) Steuerwelle.

(57) Die Steuerwelle ist aus mehreren Wellenteilstük-ken zusammengesetzt, die an jeder Flanschseite eine unterschiedliche Anzahl von Bohrungen aufweisen, welche korrespondierend bei einer gleichen Anzahl von Bohrungen wie in den Flanschen ausgeführt ist. Die unterschiedliche Anzahl von Bohrungen an jeder Flanschseite bewirkt eine Verwendung für verschiedenzylindrige Brennkraftmaschinen bei einer hohen Anzahl von Gleichteilen.

FIG. 2

Xerox Copy Centre

# STEUERWELLE

Die Erfindung bezieht sich auf eine Steuerwelle für eine mehrzylindrige Brennkraftmaschine, bestehend aus mehreren nockentragenden Wellenteilstücken, die jeweils über eine Verschraubung mit einem zwischengesetzten Lagerelement verbunden sind.

Es ist aus der DE-OS 26 57 481 eine Steuerwelle mit Kokken bekannt, die aus mehreren Teilen zusammengesetzt ist. Die Welle weist einen Flansch auf, der mit einem Lagerelement durch Schrauben verbunden wird. Weiterhin ist es bekannt, die Wellenteilstücke über Zentrierungen durch eine Vielzahl von Schrauben mit dem Lagerelement zu verbinden. Auch ist aus der DE-PS 647 163 eine Steuerwelle bekannt geworden, die über Flansche an den Wellenteilstücken mit einem Lagerelement durch Schrauben verbunden wird.

Diese bekannten Steuerwellen sind zur Verwendung bei Motoren mit verschiedenen Zylinderzahlen, wie vier, sechs, acht usw. nur mit einem relativ großen Aufwand zu verbinden, d.h. es muß für jeden Motor eine spezielle Anordnung der Löcher in den Verbindungsteilen, wie Lagerelement und in den Flanschen der Steuerwelle vorgesehen werden, was eine Vielzahl von Teilen mit verschiedenen Lochbildern bedingt.

Aufgabe der Erfindung ist es, eine Steuerwelle zu schaffen, deren Wellenteilstücke und Lagerelemente solche Lochbilder aufweisen, daß eine Verwendung für Motoren verschiedener Zylinderzahlen bei einer großen Gleichheit der Teile möglich wird.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch eine abgestimmte Anzahl von Bohrungen an jeder Seite des Lagerelements sowie an den Flanschen der Wellenteilstücke der Steuerwelle durch ein entsprechendes Verdrehen der Wellenstücke zueinander für Motoren mit verschiedenen Zylinderzahlen verwendet werden können und somit eine Gleichheit der Bauteile und eine hieraus resultierende vereinfachte Lagerhaltung erzielt wird.

So kann nach der Erfindung das Lagerelement an seiner einen Seite z.B. acht Bohrungen und auf der gegenüberliegenden Seite z.B. neuen Bohrungen aufweisen, die korrespondierend mit entsprechenden Bohrungen in den Flanschen der Wellenteilstücke angeordnet sind. Hierdurch kann durch ein entsprechendes Verdrehen der Wellenteilstücke zueinander - das bei acht Bohrungen eine Unterteilung von 45° und bei neun Bohrungen eine Unterteilung von 40° ergibt - eine Anordnung der Nokken für Motoren mit den Zylinderzahlen, wie z.B. vier, sechs, acht und neun erzielt werden. Die Verwendung von kurzen Schrauben bedingt eine Verdopplung der Bohrungen in den Flanschen und in den Lagerelementen.

Eine andere Anzahl von Bohrungen ist erforderlich für Motoren weiterer Zylinderzahl.

Um eine Herabsetzung der Verbindungsschrauben zu erzielen, können die Wellenteilstücke über eine Zentralverschraubung verbunden werden, welche Gewindestangen umfaßt, die in Muttern der Lagerelemente verspannnt werden. In diesem Fall werden statt der Schrauben nur Fixierstifte bzw. Fixierstifte und Schrauben verwendet, wobei die Flansche dann nur vier bzw. drei Bolzen aufweisen, in die dann als Mitnehmer wirkenden Fixierstifte eingesetzt werden. Die Gewindestangen sind vorzugsweise als Differentialschrauben ausgeführt. Aufgrund der genau plazierten Fixierstifte zwischen den Wellensteilstücken und der Lagerelemente kann auf eine Zentrierung zwischen diesen Bauteilen verzichtet werden.

Die Fixierstifte sind gegen ein Herauswandern durch einen Sprengring gesichert, der in einer Umfangsrinne des jeweiligen Flansches angeordnet ist.

Die Zentralverschraubung kann auch so nach der Erfindung aufgebaut sein, daß die Wellenteilstücke einzeln zusammengespannt werden, wozu die jeweiligen Gewindestangen dann einen Sechskant an einem Ende aufweisen, an den ein Drehwerkzeug ansetzbar ist.

Die aus einzelnen Wellenteilstücken zusammengesetzte Steuerwelle kann sowohl für Reihenmotoren als auch für V-Motoren verwendet werden.

Ein Ausführungsbeispiel der Erfindung ist in der Zeichnung dargestellt und wird im folgenden näher beschrieben. Es zeigen:

Fig. 1 eine schematische Darstellung einer aus mehreren zusammengesetzten Wellenteilstükken bestehende Steuerwelle,

Fig. 2 eine vergrößerte Darstellung der Einzelheit Z im Verbindungs- und Lagerbereich der Wellenteilstücke mit Zentralverschraubung,

Fig. 3 eine weitere vergrößerte Darstellung Z der Verbindung der Wellenteilstücke über eine Einzel-Zentralverschraubung,

Fig. 4 ein Lochbild der einen Seite des Lagerelements mit neun bzw. achtzehn Bohrungen und

Fig. 5 ein Lochbild der gegenüberliegenden Seite des Lagerelements mit acht bzw. sechzehn Bohrungen.

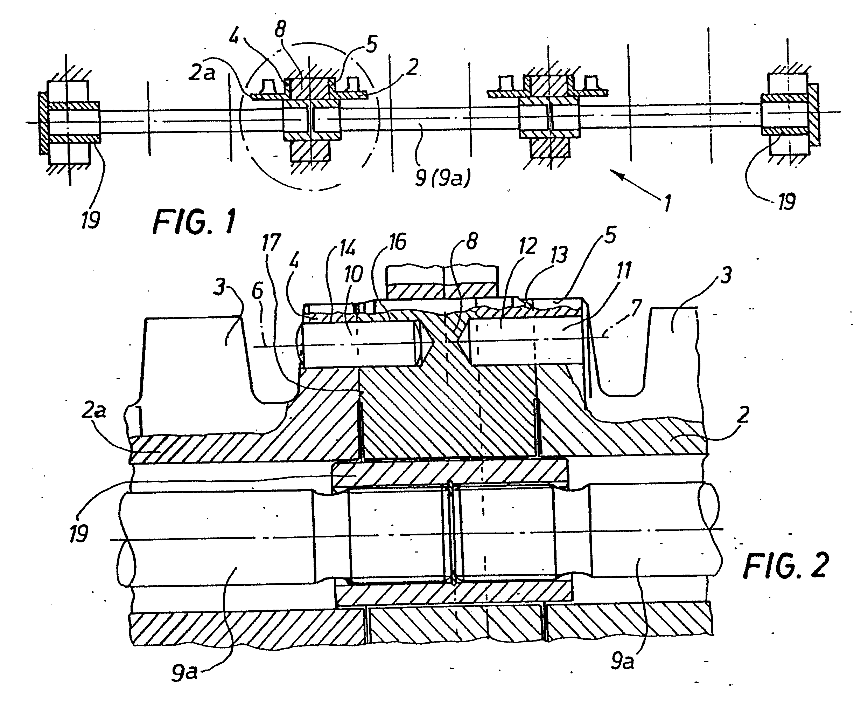

Die Steuerwelle 1 umfaßt im wesentlichen mehrere Nocken 3 tragende Wellenteilstücke 2, 2a usw., die endseitig jeweils Flansche 4 und 5 umfassen, welche über mehrere auf einem Kreis K angeordnete Schrauben 6, 7 mit einem zwischengeschalteten Lagerelement 8 verbunden sind, wobei die Schrauben in Fig. 2 nur symbolisch als Mittellinien angedeutet sind. Die Verbindung der Wellenteilstücke 2, 2a können über die Schrauben 6 und 7 erfolgen sowie über eine Zentralverschraubung mit Gewindestangen 9, 9a und als Mitnehmer wirkende Fixierstifte 10.

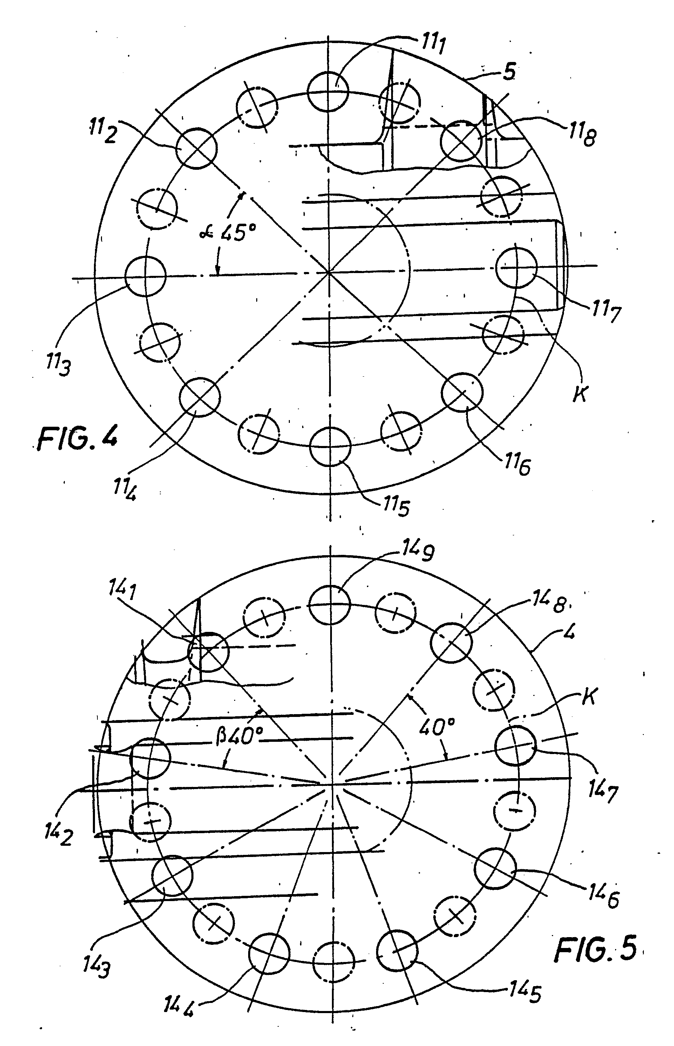

Zur Verbindung der Wellenteilstücke 2 mit dem Lagerelement 8 sind in einem Flansch acht Boh-rungen $11_1$ bis $11_8$ auf einem Kreis K angeordnet, die korrespondierend mit einer gleichen Anzahl von Bohrungen 12 im Lagerelement 8 in der gegenüberstehenden Stirnfläche 13 angeordnet sind. Das entsprechende Lochbild ist in Fig. 4 näher gezeigt, wobei zu erkennen ist, daß die Bohrungen 11 jeweils zueinander unter einem Winkel von $\alpha = 45°$ stehen. Zur Verbindung des weiteren Wellenteilstückes 2a mit dem Lagerelement 8 sind im Flansch 4 neun Bohrungen $14_1$ bis $14_9$ auf einem Kreis K angeordnet, die korrespondierend mit neun Bohrungen 16 in der Stirnfläche 17 des Lagerflansches 8 legen. Wie Fig. 5 näher zeigt, stehen die Bohrungen 14 jeweils unter einem Winkel von $\beta = 40°$ zueinander.

Bei der Verwendung von kurzen Verbindungsschrauben wird die Lochzahl verdoppelt, was in den Figuren 4 und 5 in strichpunktierten Bohrungsumrißlinien näher dargestellt ist.

Bei einer Zentralverschraubung über Gewindestangen 9, 9a können Fixierstifte 10 bei Entfall der Verbindungsschraube 6, 7 verwendet werden. Diese Fixierstifte 10 sind in Fig. 4 in den Bohrun-gen $11_1$, $11_3$, $11_5$ und $11_7$ angeordnet und in Fig. 5 in den Bohrungen $14_3$, $14_6$ und $14_9$ angeordnet. Die ursprüngliche Bohrungsanzahl in den Lagerelementen 8 bleibt bestehen.

Die Anzahl von acht bzw. sechzehn und neun bzw. achtzehn Bohrungen wird bei Vier-, Sechs-, Acht- und Neun-Zylindermotoren und die Anzahl von sieben bzw. vierzehn und zehn bzw. zwanzig Bohrungen werden für Motoren mit den weiteren Zylinderzahlen verwendet.

Die Erklärung, warum neuen Bohrungen 14 auf der einen und acht Bohrungen 11 auf der anderen Seite des Lagerelements 8 es ermöglichen, jede notwendige Steuerwellenzuordnung von Vier-, Sechs, Acht-, Neun-Zylindermotoren zu erreichen, besteht darin, daß die notwendigen Verdrehwinkel der Zylinderteilstücke zueinander in entsprechender Reihenfolge Vielfache von $90°$, Vielfache von $60°$, vielfache von $45°$ und Vielfache von $40°$ sind. Es ist nun leicht einzusehen, daß die Vier- und Acht- Zylindermotoren durch die eine Flanschseite mit acht bzw. sechzehn Bohrungen bedient werden können, während der Neun-Zylindermotor durch die andere Flanschseite mit neun bzw. achtzehn Bohrungen versorgt werden kann. Dies gilt nicht beim Sechs-Zylindermotor, weil keine der beiden Flanschseiten allein den $60°$-Winkel erhält. Betrachtet man aber den Unterschied der Teilungen der rechten und linken Seite, so erhält man $5°$ Differenz. Ein $60°$-Winkel ergibt sich dadurch, daß durch vier Vorwärts-$45°$-Schritte und drei Rückwärts-$40°$-Schritte ein Winkel von $60°$ herstellbar ist. Winkel von $120°$ und $240°$ lassen sich durch drei $40°$-Teilungen darstellen die Winkel dazwischen, nämlich $180°$ durch vier Vorwärtsschritte mit $45°$ und ein Winkel von $300°$ durch vier Rückwärtsschritte von $45°$ und drei Vorwärtsschritten von $40°$.

Die unterschiedliche Anzahl der Bohrungen auf beiden Seiten des Lagerelements 8 sind also dazu da, durch Kombination der unterschiedlichen Teilwinkel die gewünschten Winkel darzustellen.

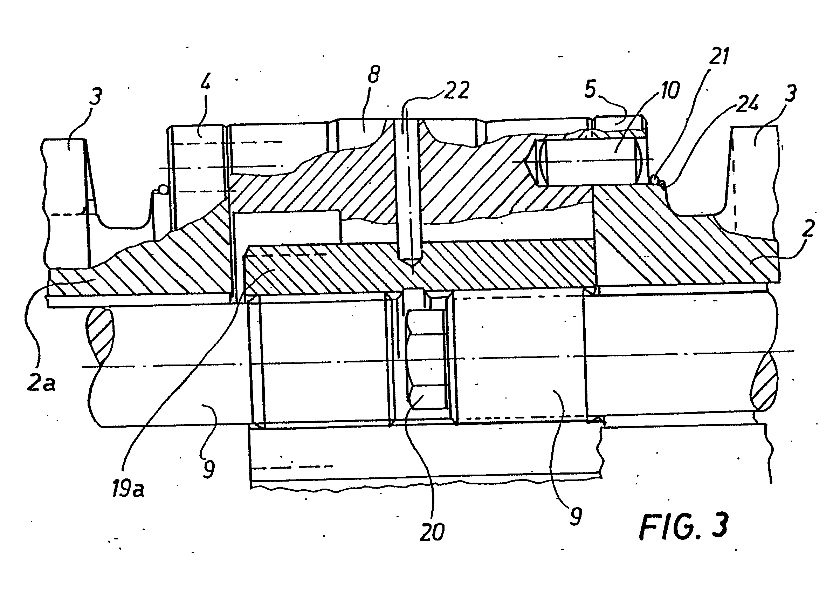

Für die Zentralverschraubung von Wellenteilstücken 2 und 2a werden die Gewindestangen 9a (Fig. 2) und die Gewindestangen 9 (Fig. 3) sowie die entsprechenden Fixierstifte 10 in den Bohrungen 11 und 14 verwendet.

Die einzelnen Wellenteilstücke 2, 2a zwischen den Lagerelementen 8 werden über die endseitig jeweils in Muttern 19 gehaltenen Gewindestangen 9a zusammengespannt. Die Zentralverschraubung umfaßt zwei oder drei Gewindestangen 9a. Bei niedriger Zylinderzahl können zwei Gewindestangen ausreichen, deren Muttern in den beiden äußeren und einer mittleren Lagerstelle verborgen sind. Bei längeren Steuerwellen werden z.B. drei bis vier Gewindestangen verwendet, wobei die inneren Ge-windestangen so als Differentialschrauben ausge-führt sind, daß bei Beibehaltung der Mutternposition in den jeweiligen mittleren zwei der drei Lagerstellen die Differentialschrauben nach außen entfernt werden können, wenn vorher die äußeren Bolzen herausgeschraubt sind.

Nach einer weiteren Ausführung der Zentralverschraubung gemäß Fig. 3 können die Wellenteilstücke 2, 2a an jeder Lagerstelle einzeln zusammengeschraubt werden, wozu die Gewindestange 9 dann einen Kopf mit einem Sechskant 20 aufweist und über einen zusammensteckbaren Schraubenschlüssel, der durch die hohlen Wellenteilstücke hindurchgeführt wird, ein Festziehen der Gewindestangen erfolgt.

Die Fixierstifte 10 der Zentralverschraubung gemäß der Figuren 2 und 3 weisen einen in einer Umfangsrinne 24 angeordneten Sprengring 21 auf, der die Fixierstifte 10 gegen ein Herauswandern sichert.

Im Lagerelement 8 ist eine Bohrung 22 zur Schmiermittel zuführungen angeordnet, die in der Mutter 19 a als Bohrung 23 fortgeführt ist und zusätzlich dazu verwendet werden kann, die Mutter 19a am Drehen zu hindern.

**Ansprüche**

1. Steuerwelle für eine mehrzylindrige Brennkraftmaschine, bestehend aus mehreren nockentragenden Wellenteilstücken, die jeweils über eine Verschraubung mit einem zwischengesetzten Lagerelement verbunden sind, dadurch gekennzeichnet, daß das Lagerelement (8) in seinen beiden Stirnflächen (13 und 17) jeweils axiale Bohrungen (12 und 16) aufweist, deren Anzahl in jeder Stirnfläche (13 und 17) unterschiedlich ist und die korrespondierend mit Bohrungen (11 und 14) in angrenzenden Flanschen (5 und 4) der Wellenteilstücke (2 und 2a) liegen, wobei die Bohrung (12, 16 und 11, 14) im Lagerelement F(8) und in den Flanschen (5 und 4) gleichmäßig auf einem Kreis (K) verteilt und unter gleichen Winkeln und zueinander angeordnet sind.

2. Steuerwelle nach Anspruch 1, dadurch gekennzeichnet, daß in der einen Stirnfläche (13) des Lagerelements (8) acht bzw. sechzehn Bohrungen (11) unter Winkeln $\alpha$ von 45° bzw. 12,5° und in der weiteren Stirnfläche (17) neun bzw. achtzehn Bohrungen (14) unter Winkeln von $\beta = 40$° bzw. 20° angeordnet sind.

3. Steuerwelle nach Anspruch 1, dadurch gekennzeichnet, daß in der einen Stirnfläche (13) des Lagerelements (8) sieben bzw. vierzehn Bohrungen und in der weiteren Stirnfläche (17) zehn bzw. zwanzig Bohrungen angeordnet sind, die korrespondierend mit Bohrungen in den Flanschen (4 und 5) der Wellenteilstücke (2 und 2a) liegen.

4. Steuerwelle nach einem oder mehreren der vorhergehenden Ansprüche, dadurch gekennzeichnet, daß die einzelnen Wellenteilstücke (2, 2a) zwischen den Lagerelementen (8) über endseitig in Muttern (19) gehaltene Gewindestangen (9, 9a) als Zuganker zusammenspannbar sind und daß in den Flanschen (4, 5) der Wellensteilstücke (2a, 2) und der Lagerelemente (8) verbindende Schrauben (6, 7) und/oder Fixierstifte (10) in den Bohrungen (14, 11) angeordnet sind.

5. Steuerwelle nach einem oder mehreren der vorhergehenden Ansprüche, dadurch gekennzeichnet, daß die Gewindestangen (9) der Zentralverschraubung jeweils an einem Ende einen Sechskant (20) aufweisen, der innerhalb einer Mutter (19a) des Lagerelements (8) angeordnet ist (Fig. 3).

6. Steuerwelle nach den Ansprüchen 4 oder 5, dadurch gekennzeichnet, daß die Gewindestangen (9, 9a) an beiden Enden als Differentialschraube mit unterschiedlichem Gewinde und gleichem Windungssinn ausgeführt sind.

7. Steuerwelle nach einem oder mehreren der vorhergehenden Ansprüche, dadurch gekennzeichnet, daß die Verbindung zwischen den Lagerelementen (8) und den Wellenteilstücken (2, d2a) über ein die Gewindestange (9, 9a) bildende Zentralverschraubung und über Fixierstifte (10) erfolgt, wobei die eine Verbindungsseite drei Fixierstifte (10) und die andere Verbindungsseite vier Fixierstifte aufweist.

8. Steuerwelle nach Anspruch 7, dadurch gekennzeichnet, daß jeder Fixierstift (10) einen in einer Umfangsrinne (24) es Flansches (4, 5) vorgespannt gehaltene Sprengring (21) aufweist.

9. Steuerwelle nach einem oder mehreren der vorhergehenden Ansprüche, dadurch gekennzeichnet, daß das Lagerelement (8) eine radiale Bohrung (22) aufweist, die in der Mutter (19a) als Bohrung (23a) fortgeführt ist und zur Aufnahme eines Arretierstiftes für die Mutter dient.

FIG. 1

FIG. 2

EP 0 407 761 A2

FIG. 3

FIG.4

FIG.5